# EUROPÄISCHE PATENTSCHRIFT

(11) **EP 3 095 983 B1**
(45) Veröffentlichungstag und Bekanntmachung des Hinweises auf die Patenterteilung: **14.03.2018**
(21) Anmeldenummer: 16168158.0
(22) Anmeldetag: 03.05.2016
(51) Int. Cl.: F02B 29/04, B01D 53/26, F02M 25/028, F28F 9/02, F28F 17/00, F28D 1/053, F28D 21/00

(54) **LADELUFTKÜHLER**
CHARGE AIR COOLER
REFROIDISSEUR D'AIR DE SURALIMENTATION

(30) Priorität: 20.05.2015 DE 102015209210
(43) Veröffentlichungstag der Anmeldung: 23.11.2016
(73) Patentinhaber: Mahle International GmbH, 70376 Stuttgart (DE)
(72) Erfinder: DIETERLE, Stefan, 73733 Esslingen (DE); STRAUß, Thomas, 73274 Notzingen (DE); BÜRCK, Christian, 71032 Böblingen (DE)
(74) Vertreter: BRP Renaud & Partner mbB Rechtsanwälte Patentanwälte Steuerberater

(56) Entgegenhaltungen:
- WO-A1-2009/130083
- DE-A1-102011 102 248
- FR-A1- 2 959 779
- JP-A- 2013 139 742
- US-B1- 6 394 076

## Beschreibung

Die vorliegende Erfindung betrifft einen Ladeluftkühler mit einem Luftaustrittskasten sowie mit einem Kondensatsammler zum Sammeln von insbesondere in dem Ladeluftkühler abgeschiedenem Kondensat oder von Feuchtigkeit gemäß dem Oberbegriff des Anspruchs 1. Die Erfindung betrifft außerdem einen Verbrennungsmotor mit einem solchen Ladeluftkühler.

Aus der DE 10 2009 042 981 A1 ist ein gattungsgemäßer Ladeluftkühler mit einem Lufteintrittskasten und einem Luftaustrittskasten sowie mit einem Kondensatsammler zum Sammeln von in dem Ladeluftkühler abgeschiedenem Kondensat bekannt. Darüber hinaus ist eine Kondensatleitung vorgesehen, die über einen Eingang mit dem Kondensatsammler und über einen Ausgang mit einem Luftansaugkrümmer verbunden ist. Hierdurch soll während des Betriebs des Ladeluftkühlers eine differenzdruckbedingte Kondensatabsaugung aus dem Kondensatsammler bewirkt werden, wodurch insbesondere bisher verwendete Aktuatoren, Klappen und/oder Steuerungen entfallen können.

Aus der DE 10 2009 011 634 A1 ist wiederum ein gattungsgemäßer Ladeluftkühler bekannt, bei welchem eine Kondensatleitung kontinuierlich als Reaktion auf einen von einer Drosselklappe erzeugten Gradienten Kondensat aus dem Kondensatsammler absaugt, sofern sich ein Motor in eingeschaltetem Zustand befindet.

Aus der DE 10 2008 045 685 A1 ist eine Verbrennungsmotor-Anordnung mit einem Verbrennungsmotor, einem Ladeluftverdichter, einer Niederdruckabgasrückführung, einem Ladeluftkühler und einer Ladeluftleitung bekannt. Dabei ist vorgesehen, dass der Ladeluftkühler an dem tiefsten Punkt eine verschließbare Kondensatablauföffnung aufweist, die durch eine Kondensatablaufleitung mit der Ladeluftleitung verbunden ist. Hierdurch soll es ermöglicht werden, einen Kondensatablauf in die Ladeluftleitung zu steuern. JP 2013 139742 A, US 6 394 076 B1 und WO 2009/130083 A1 beschreiben noch weitere Ladeluftkühler, wobei Kondensat gespeichert und wieder an den Ladeluftstrom abgegeben wird.

Generell kann es je nach Umgebungsbedingung (Temperatur und relative Luftfeuchte) sowie den vorliegenden Betriebsbedingungen dazu kommen, dass Kondensat im Ladeluftkühler anfällt. Zum einen bevorzugt bei kleiner Last und niedrigem Ladedruck zum anderen bei Niederdruck Abgasrückführanwendung. Hierdurch kann es zum einen zu einer Beeinträchtigung des Ladeluftkühlvorgangs kommen, insbesondere bei einer Umgebungstemperatur unterhalb des Gefrierpunkts, bei welchem das sich angesammelte Kondensat gefrieren kann. Dadurch ist der Durchgang der Ladeluft durch den Ladeluftkühler teilweise blockiert. Jedoch weit kritischer ist die Volumenausdehnung des Wassers beim Gefrieren, was gesprengte Rohr des Ladeluftkühlers zur Folge haben kann. Auch durch den schlagartigen Eintrag des gesamten, angesammelten Kondensates in den Verbrennungsmotor kann dieser teilweise irreparablen Schaden nehmen.
Aus diesem Grund ist es aus dem Stand der Technik bekannt, Kondensat im Ladeluftkühler zu vermeiden oder aus dem Ladeluftkühler abzuführen, wozu hierfür beispielsweise mittels Aktuatoren betriebene Klappen vorgesehen sind. Auch Bypassleitungen um den Ladeluftkühler herum sind bekannt. Aus dem Stand der Technik ist zudem bekannt, das Kondensat aufgrund eines Differenzdrucks zwischen einem Luftansaugkrümmer und einem Kondensatsammler am Ladeluftkühler permanent und ohne zusätzliche Aktuatoren bzw. Klappen abzusaugen.
Nachteilig bei den aus dem Stand der Technik bekannten Lösungen ist jedoch, dass diese entweder teuer und konstruktiv aufwendig sind, beispielsweise bei mittels Aktuatoren gesteuerten Klappen mit zugehöriger Steuerungslogik, wenig effektiv, beispielsweise bei Bypassleitungen oder ständig offenen Kondensatablauföffnungen, über die stets ein gewisser Anteil des Ladeluftstroms entweicht, oder sogar anfällig, sofern das Kondensat in externen Kondensatsammlern gesammelt wird und dort bei entsprechend geringen Außentemperaturen gefrieren und dadurch Schäden verursachen kann.
Die vorliegende Erfindung beschäftigt sich daher mit dem Problem, für einen Ladeluftkühler der gattungsgemäßen Art eine verbesserte oder zumindest eine alternative Ausführungsform anzugeben, die insbesondere die aus dem Stand der Technik bekannten Nachteile überwindet.
Dieses Problem wird erfindungsgemäß durch den Gegenstand des unabhängigen Anspruchs 1 gelöst. Vorteilhafte Ausführungsformen sind Gegenstand der abhängigen Ansprüche.
Die vorliegende Erfindung beruht auf dem allgemeinen Gedanken, zumindest einen Kondensatsammler bei einem Ladeluftkühler mit einem Kondensat/Feuchtigkeit aufnehmendem/speichernden Trockenmittel auszustatten und in einem, einem Ladeluftstrom zugänglichen Bereich innerhalb des Ladeluftkühlers anzuordnen, wodurch stromauf eines Wärmeübertragerblocks Feuchtigkeit und stromab davon Kondensat aus dem Ladeluftstrom von dem im Kondensatsammler angeordneten Trockenmittel aufgenommen und gespeichert werden kann, beispielsweise bei kleiner Last und niedrigem Ladedruck, und anschließend bei höherer Last und hohem Ladedruck wieder in den Ladeluftstrom abgeben kann. Der erfindungsgemäße Ladeluftkühler besitzt dazu einen Lufteintrittskasten und einen Luftaustrittskasten sowie den zuvor erwähnten zumindest einen Kondensatsammler zum Sammeln von insbesondere in dem Ladeluftkühler abgeschiedenem Kondensat bzw. Feuchtigkeit. Erfindungsgemäß ist es vorgesehen, einen Kondensatsammler stromab des Wärmeübertragerblocks im Ladeluftstrom anzuordnen, wobei er in diesem Fall tatsächlich Kondensat sammelt, und dass ein weiterer Kondensatsammler stromauf des Wärmeübertragerblocks Feuchtigkeit aus dem Ladeluftstrom entfernt, so dass im Wärmeübertragerblock gar kein Kondensat mehr anfällt bzw. abgeschieden wird. Unter dem Begriff "Kondensatsammler" ist somit generell ein Sammler zum Aufnehmen, Speichern und Abgeben sowohl von Feuchtigkeit als auch von flüssigem Wasser, das heißt Kondensat, zu verstehen. Durch die Anordnung des Kondensatsammlers innerhalb des Ladeluftkühlers und zugleich in einem dem Ladeluftstrom zugänglichen Bereich, ist es somit möglich, sowohl das Aufnehmen, als auch das Sammeln und wieder Abgeben des im Ladeluftkühler anfallenden Kondensats an den Ladeluftstrom innerhalb des Ladeluftkühlers zu bewerkstelligen, ohne dass hierfür weitere, separate Bauteile, wie beispielsweise Klappen, sowie zugehörige Aktuatoren, Stellantriebe und eine Steuerungslogik erforderlich sind. Der erfindungsgemäße Ladeluftkühler kann somit deutlich kostengünstiger, da konstruktiv einfacher, hergestellt werden und arbeitet zudem vollkommen selbständig, ohne dass hierfür spezielle Steuerungseinrichtungen erforderlich sind. Durch das Fehlen einer Ablauföffnung bzw. einer Bypassleitung ist der erfindungsgemäße Ladeluftkühler hinsichtlich seiner Effizienz auch deutlich besser, als aus dem Stand der Technik bekannte Ladeluftkühler, bei welchen es beim Vorhandensein einer Ablauföffnung für das Kondenstat nicht zu vermeiden war, dass stets ein gewisser Anteil des Ladeluftstroms über die Ablauföffnung entwich und nicht der Verbrennung zugeführt werden konnte. Hinzu kommt, dass durch das Fehlen bzw. Nicht-Vorhandensein einer solchen Ablauföffnung auch in diesem Bereich bislang unter Umständen auftretende akustische Störgeräusche vollständig vermieden werden können. Das in dem zumindest einen Kondensatsammler angeordnete Trockenmittel ist dabei problemlos in der Lage, die in manchen Betriebszuständen des Ladeluftkühlers, beispielsweise bei geringem Ladedruck und niedriger Last, anfallende Kondensatmenge bzw. Feuchtigkeitsmenge aufzunehmen und zu speichern, bis ein Betriebszustand mit höherer Last und höherem Ladedruck erreicht wird, bei welchem der Ladeluftstrom eine so hohe Temperatur erreicht, dass er das im Trockenmittel gespeicherte Kondensat bzw. die darin gespeicherte Feuchtigkeit aus diesem wieder austreiben und über die Ladeluftleitung einer Verbrennung im Verbrennungsmotor zuführen kann. Erreicht wird letzteres dadurch, dass der Kondensatsammler innerhalb des Ladeluftkühlers in einem dem Ladeluftstrom zugänglichen Bereich angeordnet ist, das heißt von dem Ladeluftstrom zumindest überstrichen, vorzugsweise sogar zumindest teilweise von diesem durchströmt wird. Hierdurch kann erreicht werden, dass das im Ladeluftstrom enthaltene Kondensat bzw. die darin enthaltene Feuchtigkeit zuverlässig in dem Trockenmittel gespeichert und anschließend wieder durch den Ladeluftstrom aus dem Trockenmittel ausgetrieben werden kann.

Bei einer vorteilhaften Weiterbildung der erfindungsgemäßen Lösung ist der Kondensatsammler an den Luftaustrittskasten angebaut, insbesondere angeschweißt, angelötet, angeklebt, angeschraubt oder angeclipst. Auch eine formschlüssige Verbindung ist denkbar. Bereits diese nicht abschließende Aufzählung lässt erahnen, welch mannigfaltige Möglichkeiten zur Befestigung des Kondensatsammlers am Luftaustrittskasten zur Verfügung stehen und zwar sowohl mittels lösbarer Verbindungen als auch mittels unlösbarer Verbindungen. Besonders das Anschrauben oder Anclipsen ermöglicht darüber hinaus eine erhöhte Wartungs- und Reparaturfreundlichkeit, da der Kondensatsammler einfach vom Luftaustrittskasten gelöst und beispielsweise ein Kondensatablauf im Luftaustrittskasten gereinigt werden kann. In gleicher Weise kann der Kondensatsammler an den Lufteintrittskasten angebaut sein, insbesondere angeschweißt, angelötet, angeklebt, angeschraubt, angeclipst oder über eine Formschlussverbindung angebunden sein. Der Luftaustrittskasten kann dabei als Düse und/oder der Lufteintrittskasten als Diffusor ausgebildet sein. Der Kondensatsammler kann dabei als Gussteil, entweder als metallisches Gussteil, insbesondere als Aluminiumgussteil, oder als Kunststoffspritzgussteil ausgebildet sein.

Alternativ hierzu ist selbstverständlich auch denkbar, dass der Kondensatsammler in den Luftaustrittskasten oder den Lufteintrittskasten integriert ist und einen integralen Bestandteil des Luftaustrittskastens/Lufteintrittskastens bildet. Dies kann insbesondere in der Art eines doppelten Bodens unterhalb des Luftaustrittskastens bzw. des Ladeluftkühlers erfolgen. Die Größe des Kondensatsammlers hängt dabei in erster Linie von der erwartenden Menge an Kondensat ab. Durch die Integration des Kondensatsammlers in den Luftaustrittskasten/Lufteintrittskasten kann auf eine Montage des Kondensatsammlers am Luftaustrittskasten/Lufteintrittskasten gänzlich verzichtet werden, wodurch diese Montagekosten entfallen und der Ladeluftkühler insgesamt kostengünstiger hergestellt werden kann.
Bei einer alternativen Ausführungsform der erfindungsgemäßen Lösung sind am Lufteintrittskasten und/oder am Luftaustrittskasten einstückig mit diesem ausgebildete Clipselemente angeordnet, über welche der zumindest eine Kondensatsammler mit dem Lufteintrittskasten oder dem Luftaustrittskasten verclipst ist. Diese Clipselemente können insbesondere bei einer Ausbildung des Lufteintrittskastens oder des Luftaustrittskastens als Kunststoffspritzgussteil konstruktiv einfach und kostengünstig durch ein abgeändertes Kunststoffspritzgusswerkzeug hergestellt werden. Derartige Clipselemente erlauben zum einen eine einfache und zum anderen auch eine wiederum lösbare Montage des jeweiligen Kondensatsammlers am Lufteintrittskasten bzw. am Luftaustrittskasten. In analoger Weise kann selbstverständlich am Lufteintrittskasten bzw. am Luftaustrittskasten auch eine Art Schiene vorgesehen sein, in welche der Kondensatsammler eingeschoben und durch welche der Kondensatsammler während des Betriebs des Ladeluftkühlers zuverlässig gehalten werden kann. Selbstverständlich ist dabei denkbar, dass sowohl im Lufteintrittskasten als auch im Luftaustrittskasten jeweils ein Kondensatsammler angeordnet wird. Im Lufteintrittskasten dient dabei der Kondensatsammler bzw. dessen Trockenmittel dazu, die im Ladeluftstrom enthaltene Feuchtigkeit aufzunehmen, wodurch es im nachfolgenden Wärmeübertragerblock nicht mehr zu einem Abscheiden von Kondensat, das heißt flüssigem Wasser, kommen kann. Wird der Kondensatsammler stromab des Wärmeübertragerblocks im Bereich des Luftaustrittskastens angeordnet, so kann es selbstverständlich im Bereich des Wärmeübertragerblocks zu einer Kondensation der im Ladeluftstrom enthaltenen Feuchtigkeit kommen, so dass in diesem Fall tatsächlich Kondensat im Kondensatsammler abgeschieden wird. Rein theoretisch ist auch denkbar, dass beispielsweise sowohl im Lufteintrittskasten als auch im Luftaustrittskasten ein jeweils kleiner gehaltener Kondensatsammler angeordnet ist, die jeweils einen geringeren Strömungswiderstand als ein hierzu vergleichsweise nur einseitig angeordneter größerer Kondensatsammler aufweisen, wodurch der Strömungswiderstand innerhalb des Ladeluftkühlers reduziert werden kann.

Bei einer vorteilhaften Weiterbildung der erfindungsgemäßen Lösung weist das Trockenmittel ein Molekularsieb und/oder ein Granulat mit Bentonit und/oder Silicagel auf. Als Molekularsieb werden üblicher Weise natürliche und synthetische Zeolithe oder andere Stoffe verstanden, die eine hohe Adsorptionskapazität für Moleküle unterschiedlicher Größen aufweisen. Durch eine geeignete Wahl des Molekularsiebes ist es dabei möglich, Moleküle verschiedener Größen zu trennen. In gleicher Weise kann selbstverständlich auch Silicagel oder Bentonit verwendet werden, bei welchen sich der Wasserdampf bzw. das Kondensat anlagert und dort kondensiert. Silicagel beispielsweise ist ein amorphes Siliziumdioxid von gelartiger, gummiartiger bis fester Konsistenz und besitzt eine große innere Oberfläche, die es stark hygroskopisch macht. Bentonit wiederum ist eine Mischung aus unterschiedlichen Tonmineralien, die ebenfalls eine starke Wasseraufnahmefähigkeit besitzen. Sowohl das Molekularsieb als auch Silicagel bzw. Bentonit oder allgemein Kieselgele ermöglichen durch eine Trocknung eine Regeneration.

Die vorliegende Erfindung beruht weiter auf dem allgemeinen Gedanken, einen Verbrennungsmotor mit einem solchen, zuvor beschriebenen, Ladeluftkühler auszustatten. Ein derart ausgestatteter Verbrennungsmotor, welcher beispielsweise in einem Kraftfahrzeug angeordnet werden kann, bietet den großen Vorteil, zuverlässig und störungsfrei, insbesondere im Bereich des Ladeluftkühlers, zu funktionieren, da sämtliche bisher aus dem Stand der Technik bekannten Probleme, die in Bezug auf den jeweiligen Ladeluftkühler auftreten konnten, mit dem erfindungsgemäßen Ladeluftkühler vermieden werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: eine Längsschnittdarstellung eines erfindungsgemäßen Ladeluftkühlers bei einer ersten Ausführungsform eines Kondensatsammlers,
- Fig. 2: eine Darstellung wie in Fig. 1, jedoch bei einer zweiten Ausführungsform des Kondensatsammlers,
- Fig. 3: eine Schnittdarstellung durch einen Ladeluftkühler mit einem angebauten Kondensatsammler.

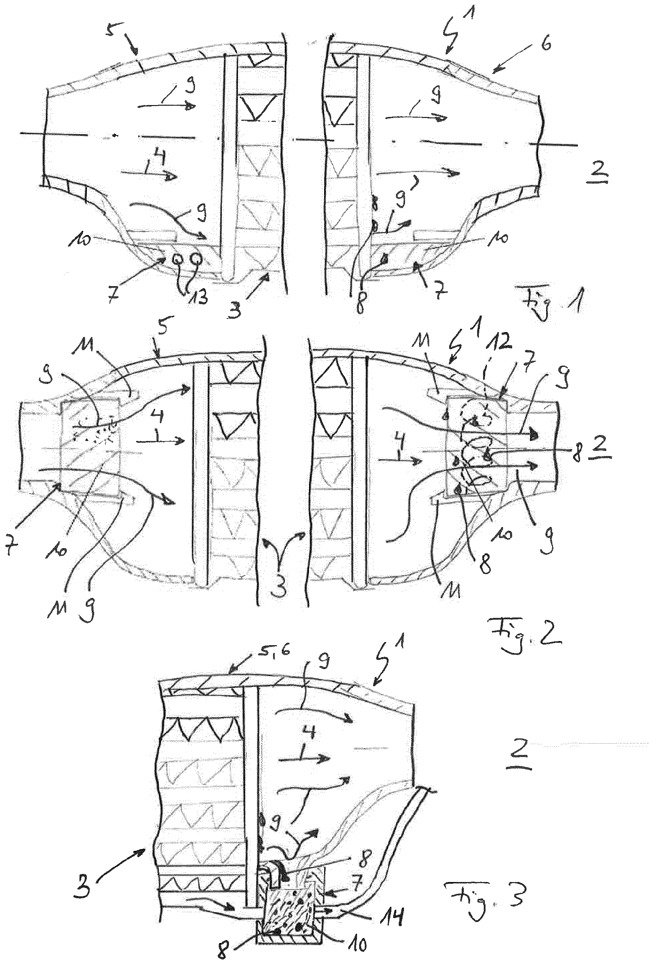

Entsprechend den Fig. 1 bis 3, weist ein erfindungsgemäßer Ladeluftkühler 1 eines im Übrigen nur angedeuteten Verbrennungsmotors 2 einen Wärmeübertragerblock 3 auf, einen in Strömungsrichtung 4 davor gelegenen Lufteintrittskasten 5 sowie einen in Strömungsrichtung 4 nach dem Wärmeübertragerblock 3 angeordneten Luftaustrittskasten 6. Gemäß den Fig. 1 und 2 ist dabei der Ladeluftkühler 1 in der Mitte im Bereich des Wärmeübertragerblocks 3 nicht vollständig dargestellt, während in Fig. 3 der Ladeluftkühler 1 lediglich im Bereich des Wärmeübertragerblocks 3 und des stromab dazu gelegenen Luftaustrittskastens 6 gezeigt ist. Darüber hinaus besitzt der Ladeluftkühler 1 zumindest zwei Kondensatsammler 7 zum Sammeln von insbesondere in dem Ladeluftkühler 1 abgeschiedenen Kondensat 8 oder aus einer Ladeluft 9 abgeschiedener Feuchtigkeit. Dabei ist klar, dass der Kondensatsammler 7 generell zur Aufnahme, insbesondere Adsorption, Speicherung und Wiederabgabe von flüssigem Wasser, das heißt Kondensat 8, in der Lage ist, ebenso wie zur Aufnahme, Speicherung und Wiederabgabe von gasförmigem Wasser, das heißt Feuchtigkeit. Der erfindungsgemäße Ladeluftkühler 1 besitzt dabei einen solchen Kondensatsammler 7, der stromauf des Wärmeübertragerblocks 3 angeordnet ist, und einen, der stromab desselben angeordnet ist. Der stromauf des Wärmeübertragerblocks 3 angeordnete Kondensatsammler 7 sammelt die in einem Ladeluftstrom 9 enthaltene Feuchtigkeit und verhindert oder minimiert zumindest dadurch die im Wärmeübertragerblock 3 üblicherweise erfolgende Kondensatbildung. Der stromab des Wärmeübertragerblocks 3 angeordnete Kondensatsammler 7 dient zum Sammeln, Speichern und Wiederabgeben des sich insbesondere im Wärmeübertragerblock 3 bildenden flüssigen Wassers, das heißt Kondensat 8.

Erfindungsgemäß sind nun die Kondensatsammler 7 in einem, dem Ladeluftstrom 9 zugänglichen Bereich des Ladeluftkühlers 1 angeordnet, beispielsweise innerhalb des Ladeluftkühlers 1 (vergleiche Fig. 1 und 2) oder aber angebaut an diesen (vergleiche Figur 3). In den Kondensatsammlern 7 ist dabei ein Trockenmittel 10 angeordnet, beispielsweise ein Molekularsieb und/oder ein Granulat mit Bentonit, Silicagel oder Kieselgel. Dieses Trockenmittel 10 ist dabei in der Lage, Feuchtigkeit bzw. Kondensat 8 aufzunehmen, zu halten und wieder an den Ladeluftstrom 9 abzugeben. Wird der erfindungsgemäße Ladeluftkühler 1 beispielsweise mit niedriger Last und geringem Ladedruck betriebe, so kann es im Wärmeübertragerblock 3 zur Kondensation von Wasserdampf kommen, welche dann im danach angeordneten Kondensatsammler 7 gespeichert werden kann, bis der Ladedruck und damit auch die Temperatur des Ladeluftstroms 9 so weit ansteigt, dass das im Kondensatsammler 7 bzw. im Trockenmittel 10 desselben gespeicherte Wasser aufgrund des Ladeluftstroms 9 wieder aus diesem ausgetrieben werden kann. Es erfolgt somit eine Rücktrocknung des Trockenmittels 10.
Betrachtet man beispielsweise die Fig. 1, so kann man erkennen, dass der jeweilige Kondensatsammler 7 einen integralen Bestandteil des Luftaustrittskastens 6 bzw. des Lufteintrittskastens 5 bildet. Die Kondensatsammler 7 sind dabei derart angeordnet, dass der Ladeluftstrom 9 diese überstreicht, oder sogar zumindest teilweise oder vollständig durchströmt, wie dies bei den gemäß der Fig. 2 dargestellten und jeweils in den Lufteintrittskasten 5 und den Luftaustrittskasten 6 integrierten Kondensatsammlern 7 der Fall ist.
Betrachtet man die Fig. 2, so kann man erkennen, dass am Lufteintrittskasten 5 und am Luftaustrittskasten 6 einstückig mit diesem ausgebildete Clipselemente 11 angeordnet sind, über welche Kondensatsammler 7 mit dem Lufteintrittskasten 5 bzw. dem Luftaustrittskasten 6 verclipst sind. Darüber hinaus sind üblicherweise der Lufteintrittskasten 5 als Diffusor und der Luftaustrittskasten 6 als Düse ausgebildet.
Sämtlichen Ausführungsformen ist dabei selbstverständlich gemein, dass jeweils ein Kondensatsammler 7 vorgesehen wird, der stromauf oder stromab des Wärmeübertragerblocks 3 angeordnet und entsprechend der jeweiligen Anordnung entweder zur Aufnahme, Speicherung und Abgabe von Feuchtigkeit (Anordnung stromauf des Wärmeübertragerblocks 3) oder aber zur Aufnahme, Speicherung und Abgabe von Kondensat (Anordnung stromab des Wärmeübertragerblocks 3) ausgebildet ist. Betrachtet man die Ausführungsform des erfindungsgemäßen Ladeluftkühlers gemäß der Fig. 3, so kann man erkennen, dass ein Kondensatsammler 7 an den Luftaustrittskasten 6 angebaut ist, insbesondere an diesen angeschweißt, angelötet, angeklebt, angeschraubt oder angeclipst ist. In gleicher Weise, jedoch nicht dargestellt, kann ein derartiger Kondensatsammler 7 an den Lufteintrittskasten 5 angebaut sein. Auch durch einen derartigen Anbau ist selbstverständlich gewährleistet, dass das Trockenmittel 10 im Kondensatsammler 7 vom Ladeluftstrom 9 überströmt und bei entsprechend hohen Temperaturen getrocknet werden kann.
Der Luftaustrittskasten 6 und/oder der Kondensatsammler 7 können/kann dabei als Gussteil, entweder als metallisches Gussteil, insbesondere als Aluminiumgussteil, oder als Kunststoffspritzgussteil ausgebildet sein.
Mit dem erfindungsgemäßen Ladeluftkühler 1 ist es somit möglich, ein bedarfsabhängiges Trocknen der Ladeluft bzw. des Ladeluftstroms 9 zu bewirken und dabei die Feuchtigkeit bzw. das Kondensat 8 im Trockenmittel 10 des Kondensatsammlers 7 solange zu speichern, bis die Temperatur des Ladeluftstroms 9 eine Rücktrocknung des Trockenmittels 10 erlaubt und dabei die Feuchtigkeit bzw. das Kondensat 8 wieder aus dem Trockenmittel 10 entfernt und der Verbrennung in dem Verbrennungsmotor 2 zuführt.
Im Vergleich zu aus dem Stand der Technik bekannten Ladeluftkühlern muss hierfür jedoch keine aufwändige Steuerelektronik, keine zusätzlichen Klappen, keine Ablauföffnungen und auch keine Bypassleitung vorgesehen werden, wodurch nicht nur der Betrieb des erfindungsgemäßen Ladeluftkühlers 1 zuverlässiger und betriebssicherer gestaltet werden kann, sondern dieser insgesamt auch kostengünstiger hergestellt werden kann.
Wenn das Trockenmittel 10 Kondensat 8 aufgenommen hat bzw. mit Kondensat 8 gesättigt ist, muss es wieder regeneriert werden. Um das Trockenmittel 8 zu regenerieren bzw. zu erhitzen sind generell verschiedene Möglichkeiten denkbar:
1) Erwärmen mittels elektrischer Energie: Das Trockenmittel 10 kann einfach mithilfe einer elektrischen Heizeinrichtung 12, insbesondere einer Heizspule o.Ä., beheizt und regeneriert werden, wie dies beispielhaft mit unterbrochen gezeichneter Linie in Fig. 2 dargestellt ist (nicht beansprucht).
2) Erwärmen mit warmen Kühlwasser: Das Trockenmittel 10 kann alternativ auch mit Kühlmittel, das aus dem Motor-Kühlkreislauf entnommen wird, beheizt werden. Hierzu kann das Trockenmittel 10 von Kühlmittelkanälen 13 (vgl. Fig. 1) durchzogen sein, durch welches heiße Kühlmittel strömt.
3) Erwärmen mit Ladeluft: Eine weitere Variante wäre Ladeluft über ein kleines Bypassrohr 14 zum Kondensatsammler 7 zu leiten und die warme Ladeluft in das Trockenmittel 10 einzublasen bzw. durch dieses hindurchzuleiten (vgl. Fig. 3).
Abhängig vom Betriebspunkt kann bei höheren Ladelufttemperaturen die Energie der Ladeluft bzw. des Ladeluftstroms 9 ausreichen, um das Kondensat 8 zu verdampfen.

Das Trockenmittel 10 kann somit erfindungsgemäß dadurch getrocknet und regeneriert werden, indem
- durch zumindest einen durch das Trockenmittel (10) verlaufenden Kühlmittelkanal (13) heißes Kühlmittel zur Regeneration des Trockenmittels (10) geleitetet wird, und/oder
- warme Ladeluft durch ein Bypassrohr (14) zum Kondensatsammler (7) und durch diesen hindurch geführt und in das Trockenmittel (10) eingeblasen wird.
Die einzelnen Trocknungsverfahren können dabei selbstverständlich alternativ oder kumulativ eingesetzt und insbesondere in Abhängigkeit eines jeweiligen Lastzustandes der Brennkraftmaschine 2 eingesetzt werden.

## Patentansprüche

1. Ladeluftkühler (1) mit einem Wärmeübertragerblock (3), einem in Strömungsrichtung (4) davor gelegenen Lufteintrittskasten (5) sowie einem in Strömungsrichtung (4) nach dem Wärmeübertragerblock (3) angeordneten Luftaustrittskasten (6) sowie mit zumindest einem Kondensatsammler (7) zum Sammeln von insbesondere im dem Ladeluftkühler (1) abgeschiedenem Kondensat (8) und/oder zum Sammeln von Feuchtigkeit, wobei der Kondensatsammler (7) in einem, einem Ladeluftstrom (9) zugänglichen Bereich des Ladeluftkühlers (1) angeordnet ist, wobei
- sowohl stromauf als auch stromab des Wärmeübertragerblocks (3) jeweils ein solcher Kondensatsammler (7) angeordnet ist,
- in den Kondensatsammlern (7) ein Trockenmittel (10) angeordnet ist, welches Kondensat (8) und/oder Feuchtigkeit aufnehmen, speichern und wieder an den Ladeluftstrom (9) abgeben kann,
**dadurch gekennzeichnet,**
- **dass** zumindest ein Kühlmittelkanal (13) durch das Trockenmittel (10 verläuft, durch welchen heißes Kühlmittel zur Regeneration des Trockenmittels (10) strömt, und/oder
- **dass** ein Bypassrohr (14) zum Kondensatsammler (7) führt und dadurch warme Ladeluft in das Trockenmittel (10) eingeblasen werden kann.

2. Ladeluftkühler nach Anspruch 1,
**dadurch gekennzeichnet,**
- **dass** zumindest ein Kondensatsammler (7) an den Luftaustrittskasten (6) angebaut ist, und/oder
- **dass** zumindest ein Kondensatsammler (7) an einen Lufteintrittskasten (5) angebaut ist.

3. Ladeluftkühler nach Anspruch 2,
**dadurch gekennzeichnet,**
- **dass** zumindest ein Kondensatsammler (7) an den Luftaustrittskasten (6) angeschweißt, angelötet, angeklebt, angeschraubt oder angeclipst ist, und/oder
- **dass** zumindest ein Kondensatsammler (7) an den Lufteintrittskasten (5) angeschweißt, angelötet, angeklebt, angeschraubt oder angeclipst ist.

4. Ladeluftkühler nach Anspruch 1,
**dadurch gekennzeichnet,**
- **dass** der Kondensatsammler (7) einen integralen Bestandteil des Luftaustrittskastens (6) bildet, oder
- **dass** der Kondensatsammler (7) einen integralen Bestandteil eines Lufteintrittskastens (5) bildet.

5. Ladeluftkühler nach einem der vorhergehenden Ansprüche,
**dadurch gekennzeichnet,**
**dass** zumindest ein Kondensatsammler (7) derart angeordnet ist, dass ein Ladeluftstrom (9) diesen überstreicht und/oder zumindest teilweise durchströmt.

6. Ladeluftkühler nach einem der Ansprüche 2 bis 5,
**dadurch gekennzeichnet,**
**dass** am Lufteintrittskasten (5) und/oder am Luftaustrittskasten (6) einstückig mit diesem ausgebildete Clipselemente (11) angeordnet sind, über welche zumindest ein Kondensatsammler (7) mit dem Lufteintrittskasten (5) oder dem Luftaustrittskasten (6) verclipst ist.

7. Ladeluftkühler nach einem der Ansprüche 1 bis 6,
**dadurch gekennzeichnet,**
**dass** das Trockenmittel (10) ein Molekularsieb und/oder ein Granulat mit Bentonit und/oder Silikagel aufweist.

8. Ladeluftkühler nach einem der Ansprüche 1 bis 7,
**dadurch gekennzeichnet,**
**dass** der Luftaustrittskasten (6) als Düse und/oder der Lufteintrittskasten (5) als Diffusor ausgebildet sind/ist.

9. Ladeluftkühler nach einem der Ansprüche 1 bis 8,
**dadurch gekennzeichnet,**
**dass** zumindest der Luftaustrittskasten (6) und/oder der Kondensatsammler (7) als Gussteil, entweder als metallisches Gussteil, insbesondere als Aluminiumgussteil, oder als Kunststoffspritzgussteil ausgebildet sind/ist.

10. Verbrennungsmotor (2) mit einem Ladeluftkühler (1) nach einem der vorhergehenden Ansprüche.

11. Verfahren zum Regenerieren von Trockenmittel (10) in einem Ladeluftkühler (1) nach einem der Ansprüche 1 bis 10, bei dem
- durch zumindest einen durch das Trockenmittel (10) verlaufenden Kühlmittelkanal (13) heißes Kühlmittel zur Regeneration des Trockenmittels (10) geleitetet wird, und/oder
- warme Ladeluft durch ein Bypassrohr (14) zum Kondensatsammler (7) geführt und in das Trockenmittel (10) eingeblasen wird.

## Claims

1. Charge air cooler (1) having a heat transfer block (3), an air inlet box (5) which is arranged upstream in the flow direction (4) and an air outlet box (6) which is arranged downstream of the heat transfer block (3) in the flow direction (4) and having at least one condensate collector (7) for collecting in particular condensate (8) which has been separated in the charge air cooler (1) and/or for collecting moisture, wherein the condensate collector (7) is arranged in a region of the charge air cooler (1) which is accessible to a charge air flow (9), wherein
- such a condensate collector (7) is arranged both upstream and downstream of the heat transfer block (3),
- in the condensate collectors (7) there is arranged a drying agent (10) which can absorb condensate (8) and/or moisture, store it and return it to the charge air flow (9) again,
**characterised in that**
- there extends through the drying agent (10) at least one cooling medium channel (13) through which hot cooling medium flows in order to regenerate the drying agent (10), and/or
- **in that** a bypass pipe (14) leads to the condensate collector (7) and warm charge air can thereby be blown into the drying medium (10).

2. Charge air cooler according to claim 1,
**characterised in that**
- at least one condensate collector (7) is fitted to the air outlet box (6), and/or
- **in that** at least one condensate collector (7) is fitted to an air inlet box (5).

3. Charge air cooler according to claim 2,
**characterised in that**
- at least one condensate collector (7) is welded, soldered, adhesively bonded, screwed or clip-fitted to the air outlet box (6), and/or
- **in that** at least one condensate collector (7) is welded, soldered, adhesively bonded, screwed or clip-fitted to the air inlet box (5).

4. Charge air cooler according to claim 1,
**characterised in that**
- the condensate collector (7) forms an integral component of the air outlet box (6), or
- **in that** the condensate collector (7) forms an integral component of an air inlet box (5).

5. Charge air cooler according to any one of the preceding claims,
**characterised in that**
at least one condensate collector (7) is arranged in such a manner that a charge air flow (9) passes over it and/or at least partially flows through it.

6. Charge air cooler according to any one of claims 2 to 5,
**characterised in that**
there are arranged on the air inlet box (5) and/or on the air outlet box (6) clip elements (11) which are integrally constructed therewith and via which at least one condensate collector (7) is clip-fitted to the air inlet box (5) or the air outlet box (6).

7. Charge air cooler according to any one of claims 1 to 6,
**characterised in that**
the drying agent (10) has a molecular sieve and/or a granulate with bentonite and/or silica gel.

8. Charge air cooler according to any one of claims 1 to 7,
**characterised in that**
the air outlet box (6) is constructed as a nozzle and/or the air inlet box (5) is constructed as a diffuser.

9. Charge air cooler according to any one of claims 1 to 8,
**characterised in that**
at least the air outlet box (6) and/or the condensate collector (7) is/are constructed as a cast component, either as a metal cast component, in particular as an aluminium cast component, or as an injection-moulded plastics material component.

10. Internal combustion engine (2) having a charge air cooler (1) according to any one of the preceding claims.

11. Method for regenerating drying agent (10) in a charge air cooler (1) according to any one of claims 1 to 10, in which
- hot cooling medium for regenerating the drying agent (10) is directed through at least one cooling medium channel (13) which extends through the drying agent (10) and/or
- warm charge air is guided through a bypass pipe (14) to the condensate collector (7) and is blown into the drying agent (10).

## Revendications

1. Refroidisseur d'air de suralimentation (1) comprenant un bloc de transfert de chaleur (3), un boîtier d'entrée d'air (5) disposé devant celui-ci dans le sens de l'écoulement (4) ainsi qu'un boîtier de sortie d'air (6) disposé après le bloc de transfert de chaleur (3) dans le sens de l'écoulement (4) ainsi qu'au moins un collecteur de condensat (7) pour collecter en particulier du condensat (8) séparé dans le refroidisseur d'air de suralimentation (1) et/ou collecter de l'humidité, dans lequel le collecteur de condensat (7) est agencé dans une zone du refroidisseur d'air de suralimentation (1) accessible à un courant d'air de suralimentation (9), dans lequel :
- un tel collecteur de condensat (7) est agencé autant en amont qu'en aval du bloc de transfert de chaleur (3) respectivement,
- dans les collecteurs de condensat (7) est agencé un moyen de séchage (10) qui peut recevoir du condensat (8) et/ou de l'humidité, le ou les emmagasiner et à nouveau les délivrer au courant d'air de suralimentation (9),
**caractérisé en ce que** :
au moins un canal de réfrigérant (13) s'étend à travers le moyen de séchage (10), à travers lequel s'écoule un réfrigérant chaud pour la régénération du moyen de séchage (10) et/ou
- un tube de dérivation (14) mène au collecteur de condensat (7) et, par suite, de l'air de suralimentation chaud peut être soufflé dans le moyen de séchage (10).

2. Refroidisseur d'air de suralimentation selon la revendication 1,
**caractérisé en ce que** :
- au moins un collecteur de condensat (7) est aménagé sur le boîtier de sortie d'air (6) et/ou
- au moins un collecteur de condensat (7) est aménagé sur un boîtier d'entrée d'air (5).

3. Refroidisseur d'air de suralimentation selon la revendication 2,
**caractérisé en ce que** :
- au moins un collecteur de condensat (7) est soudé, brasé, collé, vissé ou clipsé sur les boîtiers de sortie d'air (6) et/ou
- au moins un collecteur de condensat (7) est soudé, brasé, collé, vissé ou clipsé sur les boîtiers d'entrée d'air (5).

4. Refroidisseur d'air de suralimentation selon la revendication 1,
**caractérisé en ce que** :
- le collecteur de condensat (7) fait partie intégrante du boîtier de sortie d'air (6) ou
- le collecteur de condensat (7) fait partie intégrante d'un boîtier d'entrée d'air (5).

5. Refroidisseur d'air de suralimentation selon l'une quelconque des revendications précédentes,
**caractérisé en ce que** :
au moins un collecteur de condensat (7) est agencé de sorte qu'un courant d'air de suralimentation (9) balaie celui-ci et/ou le parcoure au moins en partie.

6. Refroidisseur d'air de suralimentation selon l'une quelconque des revendications 2 à 5,
**caractérisé en ce que** :
des éléments de clipsage (11) conçus sur le boîtier d'entrée d'air (5) et/ou sur le boîtier de sortie d'air (6) d'une pièce avec celui-ci ou ceux-ci via lesquels au moins un collecteur de condensat (7) est clipsé avec le boîtier d'entrée d'air (5) ou le boîtier de sortie d'air (6).

7. Refroidisseur d'air de suralimentation selon l'une quelconque des revendications 1 à 6,
**caractérisé en ce que** :
le moyen de séchage (10) présente un tamis moléculaire et/ou un granulé avec de la bentonite et/ou un gel de silice.

8. Refroidisseur d'air de suralimentation selon l'une quelconque des revendications 1 à 7,
**caractérisé en ce que** :
le boîtier de sortie d'air (6) est conçu sous la forme d'une buse et/ou le boîtier d'entrée d'air (5) sous la forme d'un diffuseur.

9. Refroidisseur d'air de suralimentation selon l'une quelconque des revendications 1 à 8,
**caractérisé en ce que** :
au moins le boîtier de sortie d'air (6) et/ou le collecteur de condensat (7) est ou sont conçus sous la forme d'une pièce moulée ou d'une pièce métallique moulée, en particulier d'une pièce moulée d'aluminium ou sous la forme d'une pièce moulée par pulvérisation de matière plastique.

10. Moteur à combustion (2) comprenant un refroidisseur d'air de suralimentation (1) selon l'une quelconque des revendications précédentes.

11. Procédé de régénération d'un moyen de séchage (10) dans un refroidisseur d'air de suralimentation (1) selon l'une quelconque des revendications 1 à 10, dans lequel :
- un réfrigérant chaud pour la régénération du moyen de séchage (10) est acheminé à travers un canal de réfrigérant (13) s'étendant à travers le moyen de séchage (10) et/ou
- de l'air de suralimentation chaud est acheminé à travers un tube de dérivation (14) au collecteur de condensat (7) et est soufflé dans le moyen de séchage (10).
